(19) Europäisches Patentamt / European Patent Office / Office européen des brevets

(11) **EP 2 169 606 A1**

(12) **EUROPEAN PATENT APPLICATION**

(43) Date of publication:
**31.03.2010 Bulletin 2010/13**

(51) Int Cl.:
**G06Q 10/00** $^{(2006.01)}$

(21) Application number: **09251331.6**

(22) Date of filing: **18.05.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **24.09.2008 US 99723 P**
**06.05.2009 US 436481**

(71) Applicant: **Industrial Technology Research Institute**
**Hsinchu 31040 (TW)**

(72) Inventors:
• **Liang, Che-Wei**
**31040 Taiwan R.O.C. (TW)**

• **Chuang, Yu-Hsiang**
**31040 Taiwan R.O.C. (TW)**
• **Chiang, Shih-Wen**
**31040 Taiwan R.O.C. (TW)**
• **Yang, Hui-Kuo**
**31040 Taiwan R.O.C. (TW)**
• **Kao, Chi-Chun**
**31040 Taiwan R.O.C. (TW)**

(74) Representative: **Roberts, Mark Peter**
**J.A. Kemp & Co.**
**14 South Square**
**Gray's Inn**
**London WC1R 5JJ (GB)**

(54) **System and methods for measuring three-dimensional profile**

(57) A method for detecting at least one object within a storage space. The method includes identifying at least one surface among surfaces confining the storage space, and dividing each of the at least one surface into a plurality of sub-areas. The method further includes detecting an occupancy status of each sub-area, wherein the occupancy status is indicative of the presence of the at least one object over each of the at least one surface, and deriving at least one of volume, location, and shape information of the at least one object, based on the occupancy statuses of the sub-areas.

FIG. 2

EP 2 169 606 A1

**Description**

<u>Benefit of Priority</u>

The present application is related to and claims the benefit of priority of U.S. Provisional Application No. 61/099,723, filed on September 24, 2008, entitled "A System and Method of Measuring three-dimensional Profile in a Cargo," the entire contents of which are incorporated herein by reference.

<u>Field of the Invention</u>

This invention relates in general to systems and methods for measuring a three-dimensional profile.

<u>Background</u>

Obtaining object profile or remaining space information of a space, such as a storage space in a truck or warehouse, may be useful information for businesses that manages storage, shipping, or distribution. Using shipping business as an example, a logistics center may monitor the location of the fleets through GPS (Global Positioning System) or GNSS (Global Navigation Satellite System). Based on the location information, the logistics center may adjust or optimize the routing of each truck to reduce costs. For example, when a commodity transportation request is received, a truck located near the commodities may be dispatched to pick up the goods. However, it is possible that the truck nearby does not have enough space available to carry all the commodities. Therefore, in order to improve the routing, it may be helpful for the logistics center to know the available space of trucks. With knowledge of both location and available space of each truck, the logistics center may dispatch the truck that has enough space for the commodities and is close to the place of request. Such a planning scheme may reduce unnecessary trips of trucks that do not have enough space for the commodities. Accordingly, efficiency may be increased, such as by saving time, cost, or wear on trucks.

There may be software or systems that can estimate space available in a cargo. For example, Coptimal Logistic, Inc. of Taipei, Taiwan developed a load planning software, AutoLoad™. To estimate the free space of the cargo container, this system relies information obtained in advance, such as the size of the commodities and simulates the placement of all commodities based on the obtained information. However, in many situations, the size information of commodities may be unavailable or unreliable. Further, the actual placement of goods in the cargo container may be different from the simulated scenarios. For example, the drivers may stack the goods in their own ways. Because the actual arrangement of the goods may be inconsistent with the software-simulated scenarios, routing trucks or arranging cargo space utilization based on the simulated information may be prone to errors or lead to inefficiency.

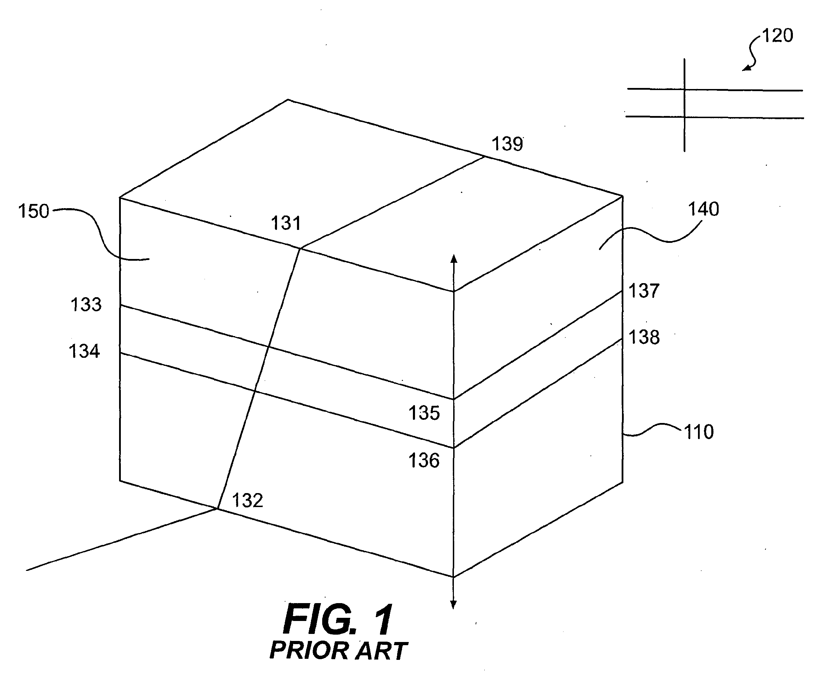

U.S. Patent No. 7,310,431 to Gokturk et al. ("the '431 patent") described a method for estimating the three-dimensional profile of an object using structured lights. The system illustrated included a camera and structured light sources. As shown in Figure 1, structured light sources may project light pattern 120 on object 110. Distorted pattern on object 110, including positions of points such as points 131-139 can be used to estimate the size and shape of object 110. For example, the length of one side of the object can be determined by measuring the distance between point 133 and point 135.

Therefore, it may be desirable to have an object-detection or profile-measuring method that may be applicable for providing information about storage spaces, such as cargo containers.

<u>Summary Of The Invention</u>

The features of the invention are defined in the claims. However, where a claim contains multiple features, it must be understood that any one of those features may be applied independently of the others. Accordingly, no assumption is to be drawn that the claims define strict combinations of features that must be grouped together for technical reasons.

Consistent with embodiments of the present invention, there is provided a method for detecting at least one object within a storage space. The method includes identifying at least one surface among surfaces confining the storage space, and dividing each of the at least one surface into a plurality of sub-areas. The method further includes detecting an occupancy status of each sub-area, wherein the occupancy status is indicative of the presence of the at least one object over each of the at least one surface, and deriving at least one of volume, location, and shape information of the at least one object, based on the occupancy statuses of the sub-areas.

Optionally, the method further comprises deriving at least one of volume, location, and shape information of a remaining space unoccupied by the at least one object within the storage space.

Optionally, the storage space is divided into a plurality of sub-spaces, each sub-space being associated with one sub-area of each of the at least one surface, the sub-area being a projection of a sub-space on the corresponding surface, and wherein deriving the volume information of the at least one object includes: identifying sub-spaces that are occupied by the at least one object, wherein a sub-space is occupied if at least two of its associated sub-areas are occupied; and deriving the volume information of the at least one object based on the volume of each occupied sub-space.

Optionally, detecting an occupancy status of each sub-area includes: receiving a signal from a sensor configured to detect an object-presence status of each sub-area of the at least one surface based on at least one emitted signal from a signal source in the storage space, wherein the signal cannot penetrate the at least one object; and identifying occupancy of a sub-area if intensity of the received signal of the corresponding light sensor is lower than a threshold.

Optionally, the signal is light, the sensor is a light detector, and the signal source is a light emitter:

Optionally, the storage space has a first end and a second end opposite to the first end, the second end being closer to an entrance of the storage space than the first end, the method further comprising: placing the at least one object close to the first end, wherein the sub-areas closer to the first end are larger than the sub-areas closer to the second end.

Optionally, detecting an occupancy status of each sub-area includes: having patterns arranged on at least some of the sub-areas of the at least one surface; receiving at least one image of the patterns from an imaging device configured to observe the storage space; and processing the at least one image to derive the occupancy status of each sub-area.

Optionally, processing the at least one image includes: mapping the at least one image to the at least one surface; and identifying occupancy of a sub-area if the corresponding pattern of the sub-area is not present based on the at least one image.

Optionally, receiving the at least one image of the patterns from an imaging device includes: segmenting the storage space into a plurality of regions; and for each region, directing the imaging device to an angle and a focal length suitable for providing an image of the patterns in the region.

Optionally, detecting an occupancy status of each sub-area includes: projecting a structured light in the storage space; taking a first set of images of a first light pattern created by the structured light using an imaging device before the at least one object is placed in the storage space; taking a second set of images of a second light pattern created by the structured light using the imaging device after the at least one object is placed in the storage space, wherein each image in the second set of images corresponds to a image in the first set of images; and processing the first set of images and the second set of images to detect the occupancy status of each sub-area.

Optionally, processing the first set of images and the second set of images includes: determining a differential pattern based on each image in the second set of images and the corresponding image in the first set of images; mapping the differential patterns to the at least one surface; and identifying occupancy of a sub-area if the sub-area is covered by the differential pattern.

Optionally, taking the first set of images and the second set of images includes: segmenting the storage space into a plurality of regions; directing the imaging device to an angle and a focal length for taking a first image of the first light pattern in a region; and directing the imaging device to the same angle and the same focal length for taking a second image of the second light pattern in the same region.

Consistent with embodiments of the present invention, there is also provided a system for detecting at least one object within a storage space. The system includes a signal source configured to emit at least one signal, wherein the at least one signal cannot penetrate the at least one object. The system further includes a plurality of sensors placed on at least one surface among surfaces confining the storage space, wherein each of the at least one surface is divided into a plurality of sub-areas and each sub-area has a sensor placed therein, wherein the plurality of sensors are configured to detect the at least one signal emitted by the signal source. The system also includes a processor configured to detect an occupancy status of each sub-area based on the detected signal of each sensor, wherein the occupancy status is indicative of the presence of the at least one object over each of the at least one surface, and derive at least one of volume, location, and shape information of the at least one object, based on the occupancy statuses of the sub-areas.

Optionally, the processor is further configured to derive at least one of volume, location, and shape information of a remaining space unoccupied by the at least one object within the storage space.

Optionally, a sub-area is determined as being occupied if intensity of the detected signal of the corresponding light sensor is lower than a threshold.

Optionally, the signal is a light signal, the sensor is a light detector, and the signal source is a light emitter.

Optionally, the storage space has a first end and a second end opposite to the first end, the second end being closer to an entrance of the storage space than the first end, wherein the sub-areas closer to the first end are larger than the sub-areas closer to the second end.

Optionally, the storage space is divided into a plurality of sub-spaces, each sub-space associated with one sub-area on each of the at least one surface, the sub-area being a projection of a sub-space on the corresponding surface, wherein the volume of the at least one object is determined by: identifying sub-spaces that are occupied by the at least one object, wherein a sub-space is occupied if at least two of its associated sub-areas are occupied; determining volume of each occupied sub-space; and deriving the volume of the at least one object based on the volume of each occupied sub-space.

Consistent with embodiments of the present invention, there is further provided a system for detecting at least one object within a storage space. The system includes a plurality of patterns placed on at least one surface among surfaces confining the storage space, wherein each of the at least one surface is divided into a plurality of sub-areas and each sub-area has a pattern placed therein. The system further includes an imaging device located within the storage space, configured to take at least one image of the patterns. The system also includes a processor configured to detect an occupancy status of each sub-area based on the at least one image, wherein the occupancy status is indicative of the presence of the at least one object over each of the at least one surface, and derive at least one of volume, location, and shape information of the at least one object, based on the occupancy statuses of the sub-areas.

Optionally, occupancy status of each sub-area is detected by: mapping the at least one image to the at least one surface; and identifying occupancy of a sub-area if the corresponding pattern in the sub-area is invisible on the at least one image.

Optionally, the storage space is segmented into a plurality of regions, wherein the imaging device is directed to an angle and a focal length suitable for taking a image of the patterns in each region.

Consistent with embodiments of the present invention, there is yet further provided a system for detecting at least one object within a storage space. The system includes a light source configured to project a structured light on at least one surface confining the storage space, wherein each of the at least one surface is divided into a plurality of sub-areas and each sub-area has a pattern placed therein. The system further includes an imaging device configured to take a first set of images of a first light pattern created by the structured light before the at least one object is placed in the storage space, and take a second set of images of a second light pattern created by the structured light after the at least one object is placed in the storage space, wherein each image in the second set of images corresponds to a image in the first set of images. The system further includes a processor configured to detect an occupancy status of each sub-area based on the first set of images and the second set of images, wherein the occupancy status is indicative of the presence of the at least one object over each of the at least one surface, and derive at least one of volume, location, and shape information of the at least one object, based on the occupancy statuses of the sub-areas.

Optionally, occupancy status of each sub-area is detected by: determining a differential pattern based on each image in the second set of images and the corresponding image in the first set of images; mapping the differential patterns to the at least one surface; and identifying occupancy of a sub-area if the sub-area is covered by the differential pattern.

Optionally, the storage space is segmented into a plurality of regions, wherein the imaging device is directed to an angle and a focal length for taking a first image of the first light pattern in a region and directed to the same angle and the same focal length for taking a second image of the second light pattern in the same region.

Additional features and advantages of the invention will be set forth in part in the description which follows, and in part will be apparent from that description, or may be learned by practice of the invention. The features and advantages of the invention will be realized and attained by means of the elements and combinations particularly pointed out in the appended claims.

It is to be understood that both the foregoing general description and the following detailed description are exemplary and explanatory and are intended to provide further explanation of the invention as claimed.

Brief Description Of The Drawings

The accompanying drawings, which are incorporated in and constitute a part of this specification, illustrate disclosed embodiments described below.

In the drawings,

Figure 1 illustrates a structured light pattern projected on an object in the prior art;

Figure 2 shows an exemplary freight space utilization system, consistent with certain disclosed embodiments;

Figure 3 shows an example of a three-dimensional storage space divided into sub-spaces and three surfaces of the storage space each divided into sub-areas, consistent with certain disclosed embodiments;

Figure 4 illustrates an exemplary sub-space occupancy detection method based on occupancy statuses of sub-areas on three surfaces, consistent with certain disclosed embodiments;

Figure 5 shows a flow chart of an exemplary process for measuring freight volume in a cargo container, consistent with certain disclosed embodiments;

Figure 6 shows an exemplary sensor-based detection system for detecting occupancy statuses of sub-areas in a cargo container, consistent with certain disclosed embodiments;

Figure 7 illustrates an exemplary object placed in the cargo space and sensor detection results on three surfaces, consistent with the disclosed embodiments;

Figure 8 shows an exemplary arrangement of sensors in a sensor-based detection system, consistent with certain disclosed embodiments;

Figure 9 shows two exemplary partitions of sub-areas of a surface, consistent with certain disclosed embodiments;.

Figure 10 illustrates an exemplary detection system based on passive or illuminant light for detecting occupancy statuses of sub-areas in a cargo container, consistent with certain disclosed embodiments;.

Figure 11 shows a flow chart of an exemplary process for detecting occupancy statuses of sub-areas using a passive illuminant-light, consistent with certain disclosed embodiments;

Figures 12A and 12B illustrate examples of using the passive illuminant-light-based detection system, consistent with certain disclosed embodiments;

Figure 13 illustrates an exemplary structured light based detection system for detecting occupancy statuses of sub-areas in a cargo container, consistent with certain disclosed embodiments;.

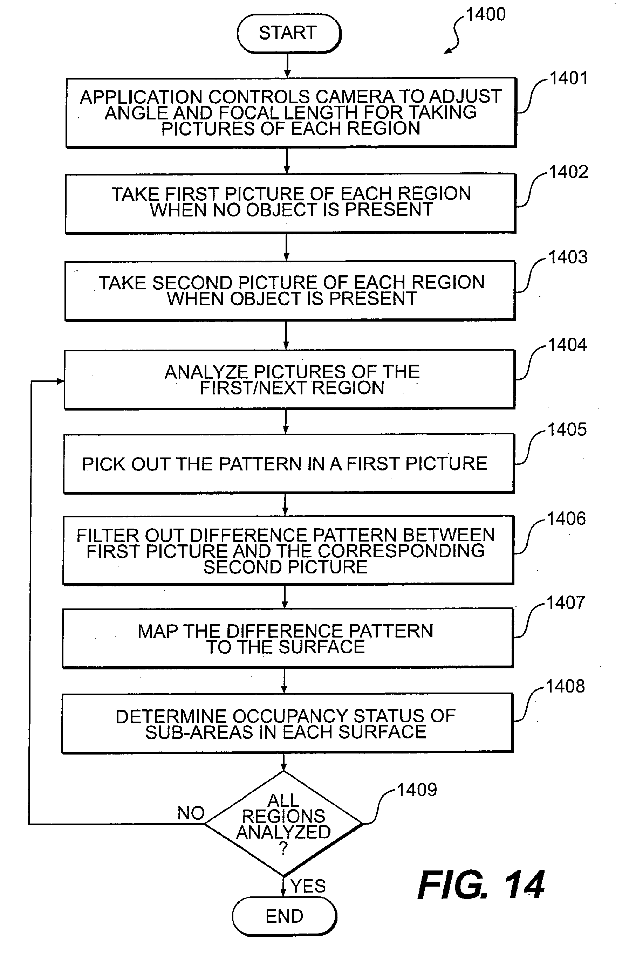

Figure 14 shows a flow chart of an exemplary process for detecting occupancy statuses of sub-areas using a structured-light-based detection system, consistent with certain disclosed embodiments;.

Figures 15A-15D illustrate examples of using the structured-light-based detection system, consistent with certain disclosed embodiments.

Description Of The Embodiments

Reference will now be made in detail to the present embodiments of the invention, examples of which are illustrated in the accompanying drawings. Wherever possible, the same reference numbers will be used throughout the drawings to refer to the same or like parts.

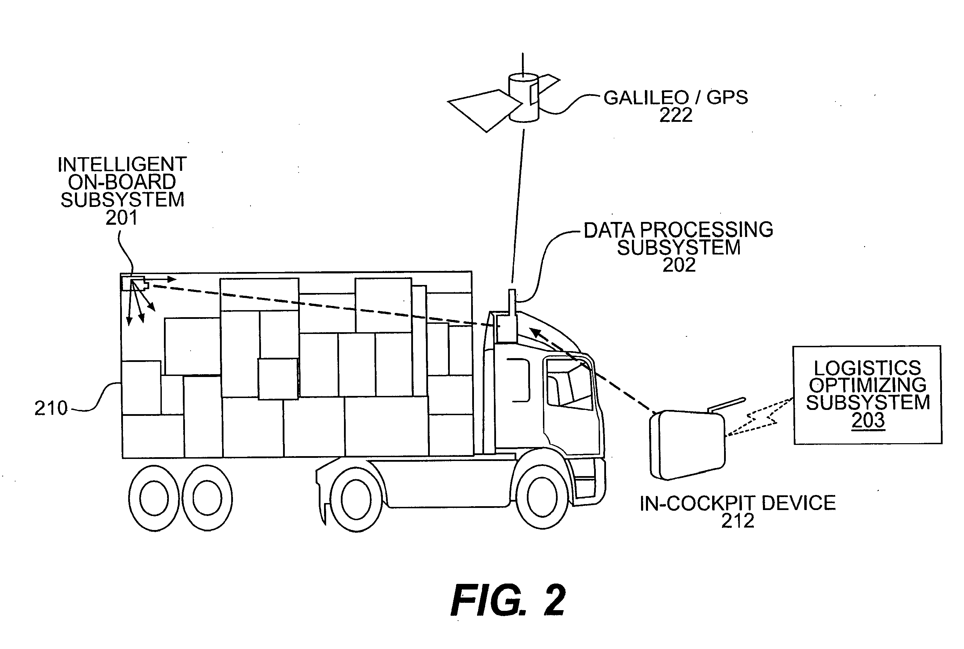

Figure 2 shows an exemplary freight space utilization system 200. Freight space utilization system 200 may include three subsystems such as an on-board detection subsystem 201, a data processing subsystem 202, and a logistics subsystem 203. On-board detection system 201 may be configured to collect or receive data related to volume, position, and shape information of the freight in a cargo container 210 and to provide the data to data-processing subsystem 202.

Data-processing subsystem 202 is configured to analyze the data received from on-board detection system 201 to determine the load volume in cargo container 210, and provide the volume information to logistics subsystem 203. Consistent with embodiments of the present disclosure, data processing subsystem 202 may include an in-cockpit mobile device 212 that integrates wireless communication, satellite navigation and UMTS (Universal Mobile Telecommunication System) technologies. In-cockpit mobile device 212 may include a wireless communication component configured to receive data from on-board detection system 201, and a satellite communication component to receive truck position information via a positioning system, such as Galileo/GPS 222. The truck position information may include, for example, coordinates of the truck position. In-cockpit mobile device 212 may further include a processor configured to analyze the received data in real-time and determine the load-volume information such as available space or volume and its shape based on a load-volume detection.

The determined load volume information, along with the truck position information, may be provided to logistics subsystem 203, such as via wireless communication. Logistics subsystem 203 may be configured to dynamically adjust routing plans of various vehicles according to real-time load volume variations. For example, upon receiving a request to pickup goods, logistics subsystem 203 may dispatch a truck close to the goods and having enough space to carry the goods.

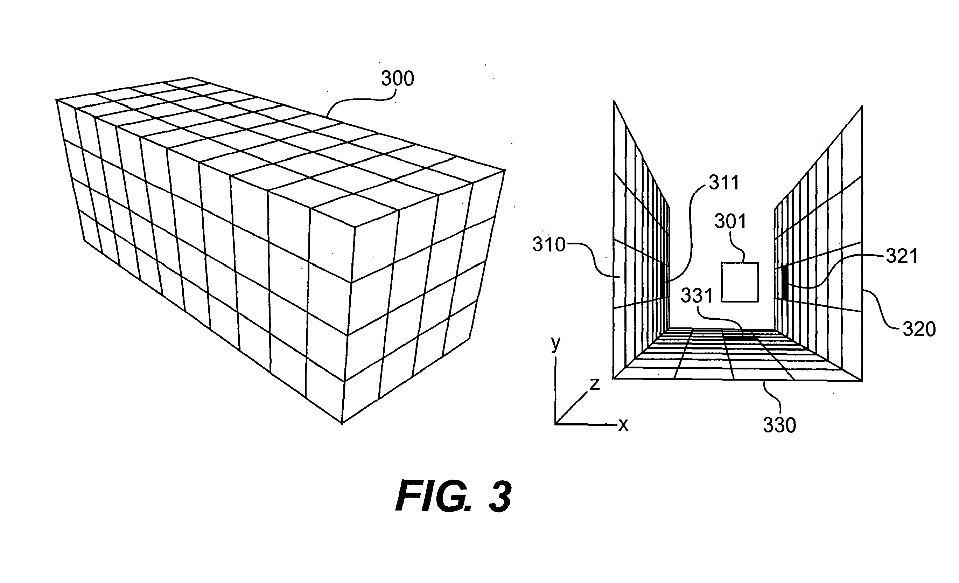

Embodiments of the present invention may provide a method for detecting one or more objects in cargo space 210 illustrated in Figure 2. Cargo space 210 can be modeled by a three-dimensional storage space 300 as shown in Figure 3. Storage space 300 may be divided into sub-spaces of equal or different sizes. Although the sub-spaces are illustrated as cubical in Figure 3 and other figures, the sub-spaces may vary its sizes or shapes depending on system design or applications. For examples, the sub-spaces may be cuboids, particles, spheres or any other regular or irregular three-dimensional shapes. Volume of the objects present in storage space 300 may be estimated by measuring the number of sub-spaces that are occupied by the objects and the volume of each sub-space.

In some embodiments, the three-dimensional profile of objects may be derived based on results of two-dimensional measurements. Storage space 300 may have several two-dimensional surfaces that confines the space, such as six surfaces in the illustrated example. Each sub-space may have a corresponding projected area on each of the confining surfaces. As an example, and the occupation status of a sub-space may be determined based the statuses of the corresponding projected areas on one or more surfaces, such as left surface 310, right surface 320, and bottom surface 330. Those statuses may be based on whether sensors can sense presence of object or light; whether those areas are blocked when viewed from certain view points; or whether shadows or shades are present when one or more light source project light. In some examples, the corresponding projected areas may change its location based on the methods or mechanism of determining object profile.

In some embodiments, each surface may be divided into smaller areas called sub-areas. A sub-area corresponds to the projected area of a subspace on the corresponding surface. For example, subspace 301 corresponds to sub-area 311 on left surface 310, sub-area 321 on right surface 320, and sub-area 331 on bottom surface 330. Although the sub-areas are illustrated as squares in the present disclosure consistent with the cubic shape of the subspaces, the subspaces may have any regular or irregular shapes, such as rectangular, circular, or any other shapes.

If subspace 301 is occupied by an object, its projections on surfaces 310, 320, and 330, i.e., sub-areas 311, 321, and 331 may also be occupied, shadowed (depending on the direction of a light source), or have some objects present. Therefore, the occupation status of a subspace can be derived based on the occupancy statuses of its corresponding sub-areas on at least one two-dimensional surface confining storage space 300.

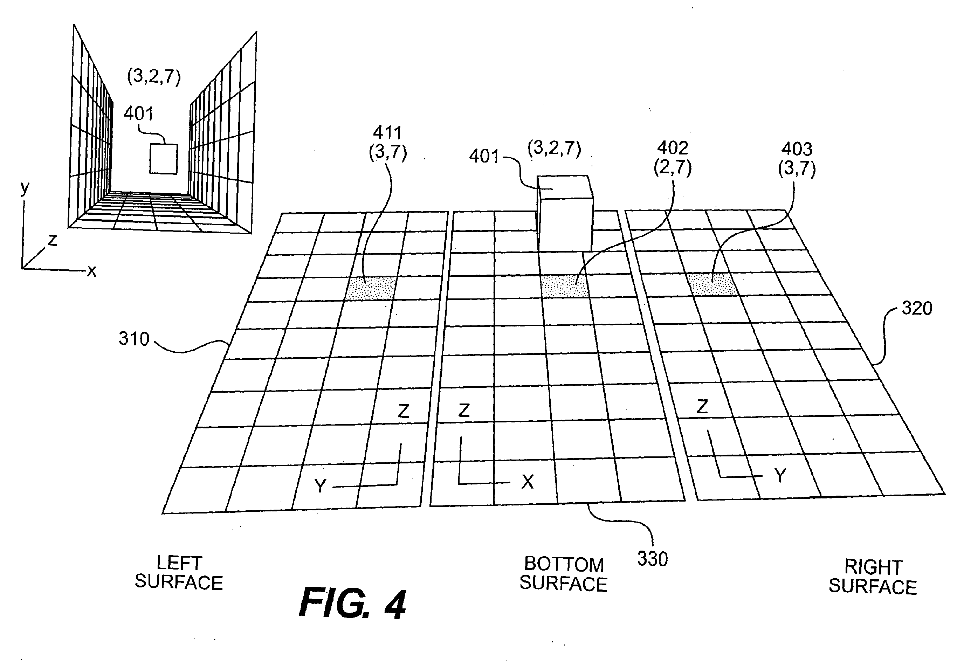

Figure 4 illustrates an exemplary free-space detection method based on occupancy statuses of sub-areas on three surfaces. A three-dimensional coordinate may be set up for storage space 300, such that each subspace is assigned with three-dimensional coordinates (x, y, z), and its corresponding sub-areas on surfaces 310, 320, and 330 have coordinates (y, z), (y, z), and (x, z). For example, as shown in Figure 4, subspace 401 has three-dimensional coordinates (3, 2, 7). The corresponding sub-area 411 on left surface 310 has two-dimensional coordinates (y, z). The corresponding sub-area 421 on left surface 320 has two-dimensional coordinates (y, z). The corresponding sub-area 431 on left surface 330 has two-dimensional coordinates (x, z).

A state function may be defined for each two-dimensional surface to indicate the occupancy status of each sub-area in the surface. If a sub-area of the two-dimensional surface is occupied, the function returns "1," and otherwise returns "0." For example, $S_L(x, z)$, $S_B(y, z)$, $S_R(x, z)$ may be state functions of the left surface 310, bottom surface 330, and right surface 320, respectively. As shown in Figure 4, when subspace 401 is occupied, state functions $S_L(2, 7)$, $S_B(3, 7)$, $S_R(2, 7)$ may return "1." Other sub-areas that are not occupied will return "0."

A state function $S_c(x, y, z)$ is also defined for storage space 300 to indicate the occupancy status of each subspace. The state function returns "1" if the subspace is occupied, and returns "0" otherwise. For example, as shown in Figure 4, when subspace 401 is occupied, state function $S_c(3, 2, 7)$ will return "1." The return value of $S_c(x, y, z)$ can be determined based on the return values of state functions $S_L(x, z)$, $S_B(y, z)$, $S_R(x, z)$. Consistent with embodiments of the present invention, an algorithm is provided to define the state function $S_c(x, y, z)$ by integrating the state functions $S_L(x, z)$, $S_B(y, z)$, $S_R(x, z)$. When the bottom surface corresponding to the subspace is not occupied, the subspace is determined as free. Otherwise, when no more than two sub-areas corresponding to the subspace are occupied by the object, the subspace is also determined as free. Otherwise, the corresponding subspace is determined as occupied. That is:

$$S_C(i,j,k) = \begin{cases} 0, & \text{if } S_B(i,k) = 0 \\ 0, & \text{if } S_L(j,k) + S_B(i,k) + S_R(j,k) \le 1 \\ 1, & \text{Otherwise} \end{cases} \qquad (1)$$

Although formula (1), in connection with the example illustrated in Figure 4, determines the occupancy status of a subspace based on three surfaces, it can be generalized to determine the occupancy status of a subspace based on any number of surfaces. Assume $S_P(i,j,k)$ is the state function of the sensed sub-area corresponding to the subspace (i,j,k) on surface p and N is the number of surfaces. The generalized formula for determining the occupancy status of subspace (i,j,k) is:

$$S_C(i,j,k) = \begin{cases} 0, & \text{if } S_P(i,j,k) = 0 \text{ and } S_P \text{ is the bottom surface} \\ 0, & \text{if } \sum_{p=1}^{N} S_P(i,j,k) \le 2 \\ 1, & \text{Otherwise} \end{cases} \qquad (2)$$

An object, such as goods or a package to be delivered, may occupy one or more subspaces in storage space 300. The volume of the object, therefore, can be estimated by counting the number of subspaces occupied by the object, that is, the total number of state functions $S_c(i, j, k)$ that return "1." This number can be determined by summing up the return values of state function $S_c(i, j, k)$. Similarly, the volume of the remaining space unoccupied by the objects in storage space 300 is determined by counting the number of state functions $S_c(i, j, k)$ that return "0." Alternatively, the volume of the free space can also be determined by subtracting the volume of occupied space from the entire volume of storage space 300.

Assuming all the subspaces are equal-sized and have width W, height H, and depth D, and $N_W$, $N_H$, $N_D$ are number of subspaces in the x, y, z axis, respectively. The volume of free space can be calculated by the following formula:

$$V_{free} = W \times H \times D \times [N_W \times N_H \times N_D - \sum_{i=1}^{N_w} \sum_{j=1}^{N_H} \sum_{k=1}^{N_D} S_C(i,j,k)] \qquad (3)$$

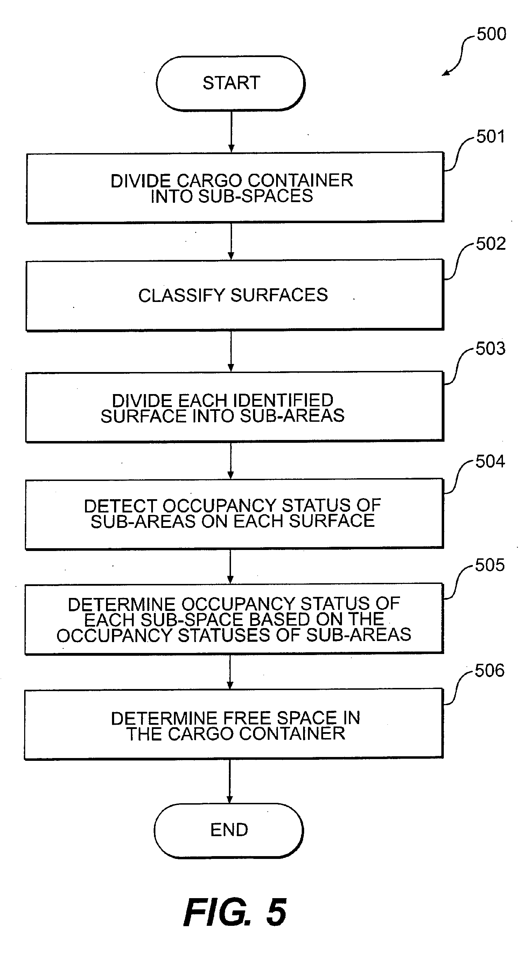

Figure 5 shows a flow chart of an exemplary process 500 for measuring freight volume in cargo container 210. Consistent with embodiments of the present invention, process 500 is implemented by freight space utilization system 200. First, cargo container 210 is divided into subspaces (step 501). The six surfaces confining the three-dimensional space of cargo container 210 are classified, and at least one surface is identified among the six surfaces (step 502). For example, three surfaces including left surface 310, right surface 320, and bottom surface 330 are identified as shown in Figure 3. Each surface is divided into sub-areas, corresponding to the projection of each subspace on the surface (step 503).

The occupancy status of each sub-area in each identified surface is detected (step 504). For example, two-dimensional state functions may be used to indicate the occupancy status of the sub-areas. Consistent with embodiments of the present invention, step 504 is implemented by on-board subsystem 201. Based on the occupancy statuses of the corresponding sub-areas, occupancy status of each subspace may be determined according to formula (1) (step 505). For example, a three-dimensional state function may be used to indicate the occupancy status of the subspaces. The free space in cargo container 210 is then determined or estimated based on the occupancy statuses of the subspaces, according to formula (2) (step 506). In step 506, besides the volume of the existing commodities, other characteristics of the commodities, such as the position and shape of the commodities, can also be determined based on the occupancy status of the subspaces in the three-dimensional coordinate system. Consistent with embodiments of the present invention, steps 505 and 506 are implemented by data processing subsystem 202.

The occupancy statuses of sub-areas can be detected by measuring the projection of the objects placed in cargo container 210. Consistent with embodiments of the present invention, three embodiments of on-board subsystem 201 and their corresponding implementations of step 504 are provided for detecting the occupancy statuses of sub-areas on the at least one surface.

**A. Sensor-based Detection System**

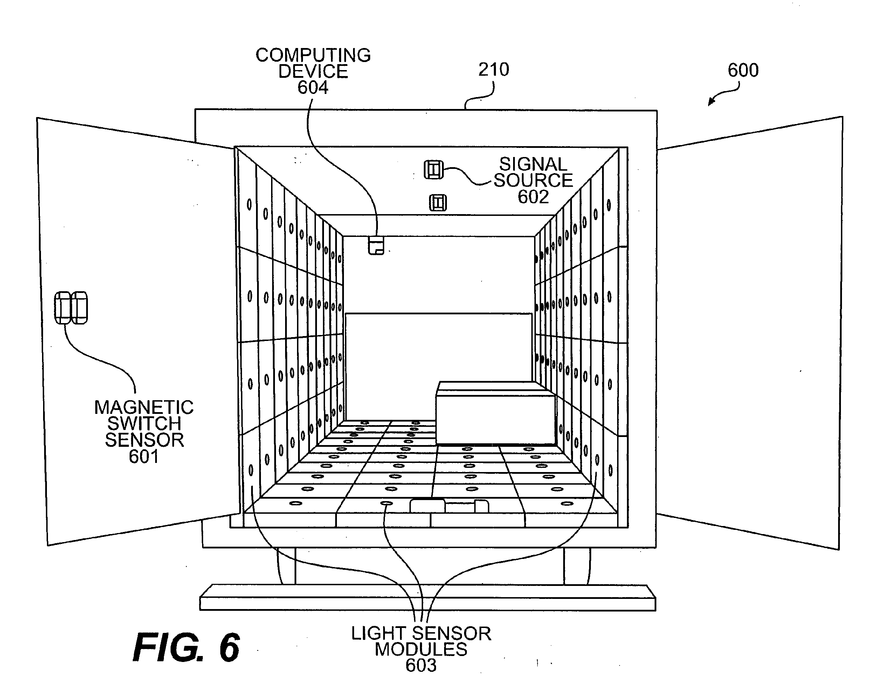

Figure 6 shows an exemplary sensor-based detection system 600 for detecting occupancy statuses of sub-areas in cargo container 210. As shown in Figure 6, sensor-based detection system 600 is an embodiment or a part of freight space utilization system 200. Sensor-based detection system 600 includes a switch 601, a signal source 602, a plurality of sensors 603, and a communication device 604.

Switch 601 may be mounted on the door of cargo container 210 and indicates the status of door. For example, switch 601 may be a magnetic switch sensor that detects if the door is open or closed. Signal source 602 is mounted on the ceiling of cargo container 210 and is configured to emit a signal. The signal may be absorbed or substantially attenuated by the objects in the container, such that the signal cannot penetrate the objects. For example, the signal may be a light signal, an infrared signal, an ultrasound signal, or any other suitable electromagnetic wave signal or mechanical wave signal. Consistent with some embodiments, signal source 602 is a light emitting source, such as a lamp or a plurality of lamps, used to lighten the inner space of cargo container 210. The intensity of the emitted signal may be adjusted to ensure that it is detectable by sensors 603.

Consistent with the type of signal source 602, sensors 603 can be light sensors, infrared sensors, ultrasound sensors, force sensors, any other type of sensors. Sensors 603 are installed in the identified surfaces of cargo container 210. For example, as shown in Figure 6, sensors 603 are installed in the left surface, the right surface, and the bottom surface. Each sub-area has a sensor installed therein.

Each sensor has two statuses to show if the corresponding sub-area is in the light or in the shade. For example, when an object is placed on the floor, sensors 603 that are located right beneath the object can only detect a nominal amount of the signal emitted by signal source 602. Similarly, sensors 603 that are located behind an object on the left or right surface are also shaded, and thus the sensors detect only a nominal amount of signal. Therefore, sensors 603 may compare the intensity of the detected signal with a small threshold value. If the intensity is below the threshold value, the output sensor status is set as unoccupied. Otherwise, the output sensor status is set as occupied. The output sensor status is indicative of the occupancy status of the corresponding sub-area.

Computing device 604 is connected to switch 601 and sensors 603. Consistent with embodiments of the present invention, computing device 604 may be part of data processing subsystem 202. Computing device 604 is configured to receive a door status signal from switch 601 and the output sensor status data from sensors 603. Computing device 604 is then configured to integrate the output sensor statuses of sensors 603 to compute the three-dimensional profile of the objects. For example, computing device 604 may include suitable hardware, such as a processor, and software to implement process 500. Computing device 604 may also include controller modules that provide control instructions to the other components of sensor-based detection system 600.

In an exemplary usage scenario, the driver of the truck delivers commodities to a location. After the commodities are unloaded, the driver will close the door of the cargo container. Once the door is closed, the door status will be detected by switch 601, and switch 601 may send a signal to computing device 604. Upon receiving the signal, computing device 604 turns on source 602 that mounted on the ceiling of cargo container 210. Computing device 604 then receives output sensor status data from sensors 603, and computes the load information. The determined load information, including the three-dimensional profile of the remaining commodities, and volume of free space in cargo container 210, is sent to logistics optimizing subsystem 203.

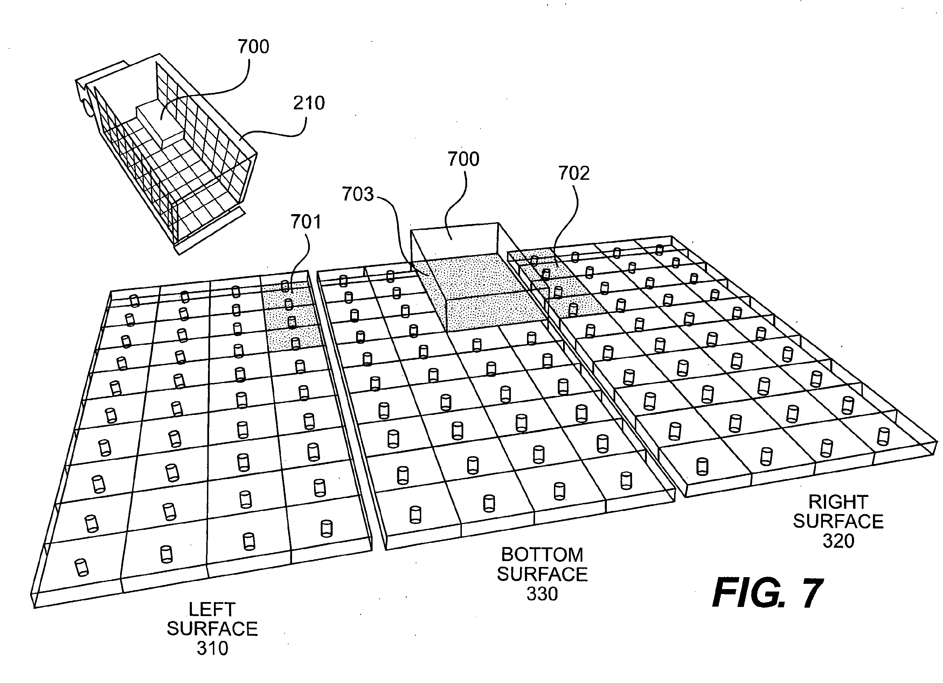

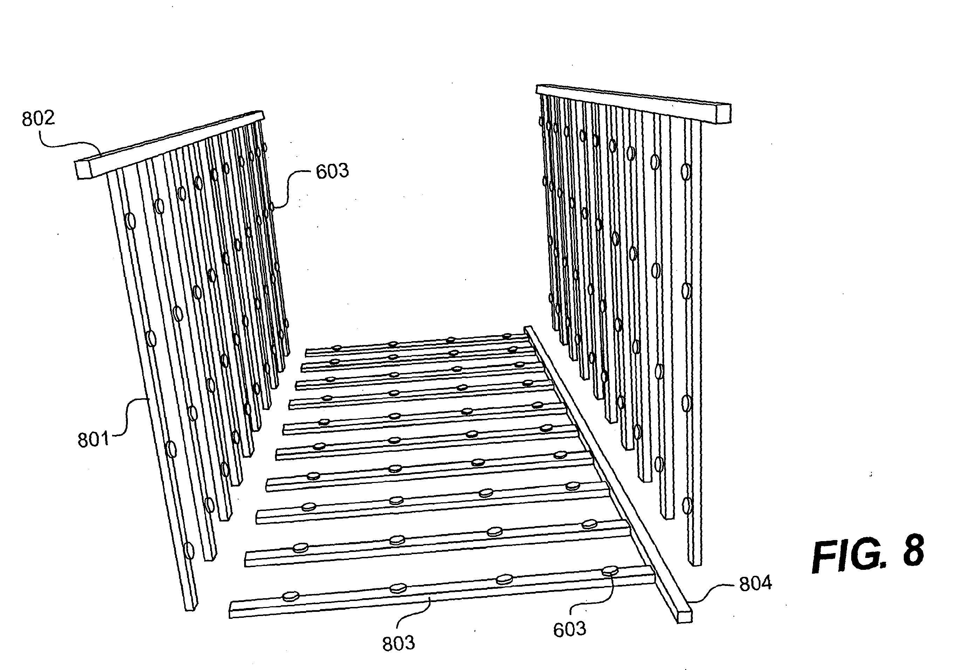

Figure 7 illustrates an exemplary object 700 placed in cargo container 210 and sensor detection results on three surfaces. As shown in Figure 8, object 700 is placed towards the inner right side of cargo container 210. As a result, the four highlighted sensors 702 in right surface 320 behind object 700, and the eight highlighted sensors 703 in bottom surface 330 beneath object 700, are in the shade. Depending on the position of signal source 602, the four highlighted 701 sensors in left surface 310 may or may not be in the shade. Accordingly, the two-dimensional state functions will take values such that $S_L$ (1, 7:10) = 1, $S_B$ (3:4, 7:10) = 1, and $S_R$ (1, 7:10) = 1 or 0, and all others = 0. According to formula (1), regardless $S_R$ (1, 7:10)=1 or 0, the subspaces (1, 3:4, 7:10) will be determined as occupied by object 800. Therefore, the two-dimensional state function will take values such that $S_c$ (1, 3:4, 7:10) = 1, and all others = 0.

Figure 8 shows an exemplary installation of sensors 603 in the sensor-based detection system 600. Sensors 603 in the left and right surfaces are shielded inside long stick protectors 801, along with the wires that connect sensors 603 with computing device 604. Long stick protectors 801 are then mounted to the ceiling of cargo container 210 via metal connectors 802. Consistent with some embodiments, for a sea container, long stick protectors 801 are directly fixed to the chamber of the wave-shaped walls. Sensors 603 in the bottom surface are shielded inside long stick protectors 803, and long stick protectors 803 are then mounted to the floor of cargo container 210 via metal connectors 804. If cargo container 210 has a wooden floor, sensors 603 in the bottom surface can be directly embedded in the floor.

Consistent with embodiments of the present invention, sensors 603 can be installed at a uniform density or a varying density. That is, certain areas of the two-dimensional surfaces may have denser distribution of sensors and the other areas may have sparser distribution of sensors. Since each sensor is located in the center of a sub-area, the distribution density of sensors 603 is inversely proportional to the size of the sub-areas.

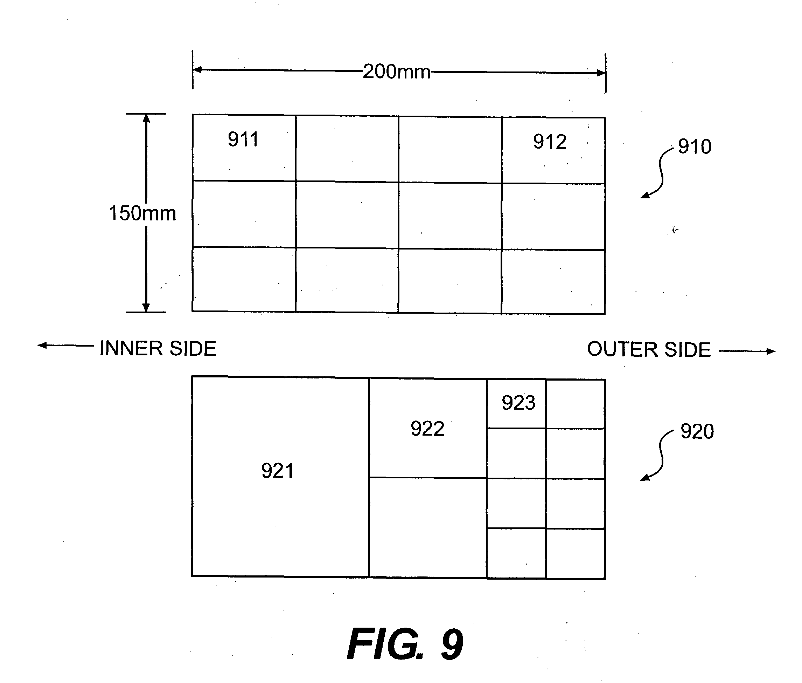

In the practice of logistics, the placement of commodities usually starts from an inner side of cargo container 210 that is closer to the cockpit, and then extends to the outer side that is away from the cockpit. Therefore, in order to accurately determine the volume of available space in cargo container 210, more precise volume information is desired for the outer side, as opposed to the inner side. As shown in Figure 9, detection precision may be improved by inhomogeneously distributing the sensors, without increasing the total number of sensors used for the surface.

Figure 9 shows two exemplary partitions of the sub-areas in a two-dimensional surface. Each of surface 910 and surface 920 has a size of 200 mm x 150 mm. In the first exemplary partition, surface 910 is divided into 12 equal-sized sub-areas and 12 sensors are distributed homogeneously throughout surface 910. For example, sub-area 911 and sub-area 912 each has the same size of 50 mm x 50 mm: Therefore, regardless of how many loads are placed in the cargo, the maximum precision of the first partition method is 50 mm x 50 mm.

Alternatively, in the second exemplary partition, surface 920 is divided into 11 sub-areas of different sizes and 11 sensors are distributed inhomogeneously throughout surface 920. For example, sub-areas 921-923 have sizes 75 mm x 150 mm, 50 mm x 75 mm, and 37.5 mm x 37.5 mm respectively, in a decreasing order. The sub-area sizes are larger towards the inner side, and smaller towards the outer side. Therefore, when cargo container 210 is over 60% occupied, the maximum precision of the second partition method can be as high as the size of the smallest rectangle, which is 37.5 mm x 37.5 mm. Therefore, more accurate estimation can be achieved using the inhomogeneous partition when load rate is high without adding extra sensors.

When inhomogeneous partition is used, the volume of free space can be calculated by the following formula, as a special case of formula (3). Assume that $L_W$, $L_H$, $L_D$ are length of the inner space of cargo in the x, y, z axis respectively, and $N_W$, $N_H$, $N_D$ are number of subspaces in the x, y, z axis. $V_{i,j,k}$ is the volume of subspace with coordinate (i, j, k). The volume of free space is determined by:

$$V_{free} = L_W \times L_H \times L_D - \sum_{i=1}^{N_W} \sum_{j=1}^{N_H} \sum_{k=1}^{N_D} S_C(i,j,k) \times V_{i,j,k} \qquad (4)$$

**B. Passive Illuminant Light Based Detection System**

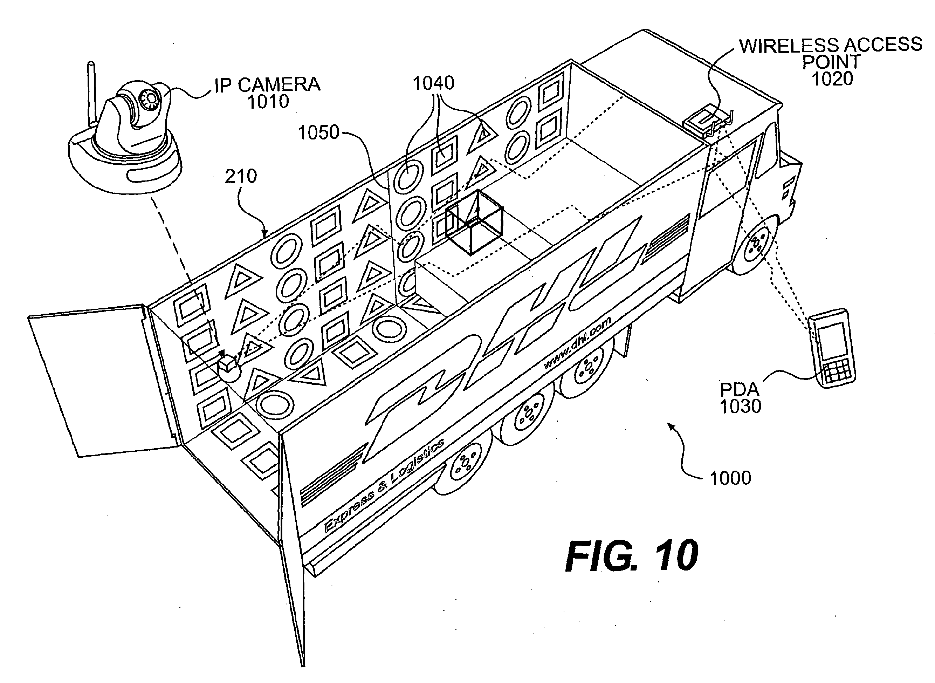

Figure 10 shows an exemplary passive illuminant light based detection system 1000 for detecting occupancy statuses of sub-areas in cargo container 210. Detection system 1000 is an embodiment or a part of freight space utilization system 200. Detection system 1000 includes an imaging device 1010, a wireless access point 1020, a PDA 1030, and a plurality of passive illuminant patterns 1040.

Passive illuminant patterns 1040 are placed on the three inner surfaces of cargo container 210. Each passive illuminant pattern is located in a sub-area. As shown in Figure 10, passive illuminant patterns 1040 are uniformly spaced like grids. Passive illuminant patterns 1040 can be any shape, such as square, rectangular, circular, bar code, or triangular. In some embodiments, they can also be as simple as grid lines or equally-spaced dots.

Imaging device 1010 is mounted on the ceiling towards the rear side of cargo container 210, and is configured to take pictures of passive illuminant patterns 1040. For example, imaging device 1010 may be a camera. The angle of imaging device 1010 can be adjusted in both horizontal and vertical directions. The focal length of imaging device 1010 can also be adjusted to focus on a specific object or region. Since cargo container 210 is usually too large to be included in a single picture, cargo container 210 can be segmented into a plurality of regions by separation lines 1050. Consistent with embodiments of the present invention, patterns in different regions are arranged to appear in a different sequence of shapes. Imaging device 1010 can be adjusted to a specific angle and a specific focal length to take pictures of the patterns within each region. With the assistance of separation lines 1050, passive illuminant patterns 1040 in each segmented region can be determined from the picture taken for that region.

Imaging device 1010 is controlled by PDA 1030 via wireless access point 1020 mounted on the truck. Consistent with embodiments of the present invention, wireless access point 1020 may be part of in-cockpit device 212. PDA 1030 may contain various applications to adjust the angle and focal length of imaging device 1010 for taking pictures of each region in cargo container 210. PDA 1030 may further contain applications to analyze the pictures. Patterns hidden behind or beneath an object are not visible in the pictures. The visibility of a pattern indicates whether the corresponding sub-area is occupied. Therefore, the occupation status of each sub-area can be determined by processing the pictures for the locations of invisible patterns.

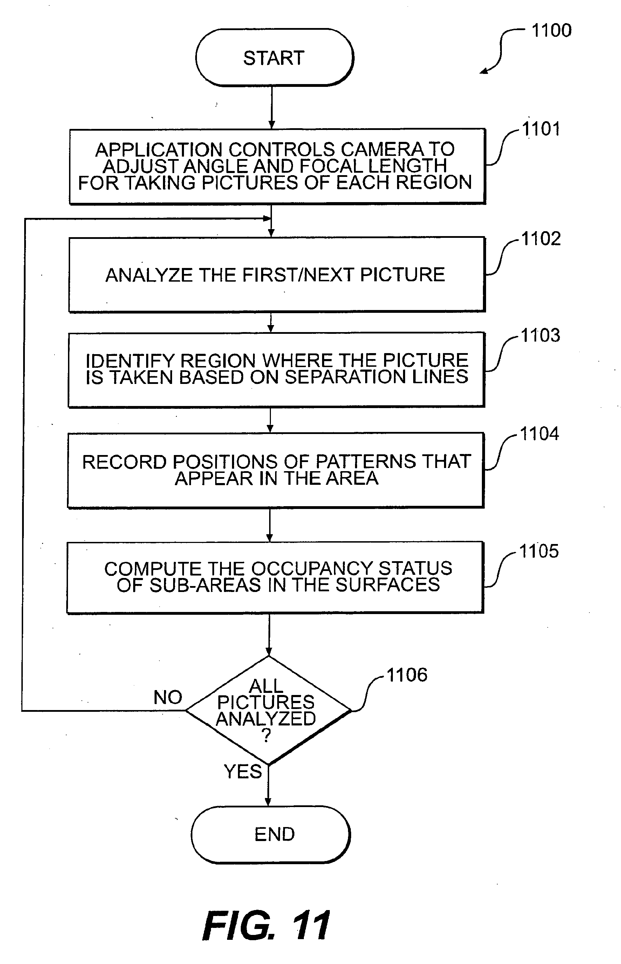

Figure 11 shows a flow chart of an exemplary process 1100 for detecting occupancy statuses of sub-areas using a passive illuminant light based detection system 1000. Applications contained in a remote device, such as PDA 1030, or embedded inside the imaging device may adjust the angle and focal length of imaging device 1010 for taking pictures of patterns in each region of cargo container 210 (step 1101). Cargo container 210 may be segmented into a plurality of regions, and one or more pictures may be taken in each region. The pictures are analyzed one after another. In step 1102, the picture is analyzed. First, the region in which the current picture is taken is identified (step 1103). Since the regions are segmented using separation lines, a region can be identified by detecting the separation lines. The different sequence of patterns appearing in the regions may also assist identifying the region.

Based on the current picture, positions of patterns that appear in the identified region are recorded (step 1104). If no object hides the patterns from imaging device 1010, the patterns will be visible from the pictures. The positions and the styles of the visible patterns are then analyzed to compute the occupancy status of sub-areas in the surfaces (step 1105). Consistent with embodiments of the present disclosure, the positions of the patterns on the picture are mapped to positions of sub-areas in the identified region. A sub-area is set as unoccupied, if the corresponding pattern is visible. Similarly, a sub-area is set as occupied, if the corresponding pattern is invisible.

In step 1106, it is determined whether all the pictures are analyzed. If there is still at least one picture left unanalyzed, process 1100 returns to step 1102 to analyze the next picture. Steps 1102-1106 will be repeated until all the pictures are analyzed, and then process 1100 will end. After the occupancy statuses are detected, process 500 may be adapted for computing the shape and volume of a vacant space in cargo container 210.

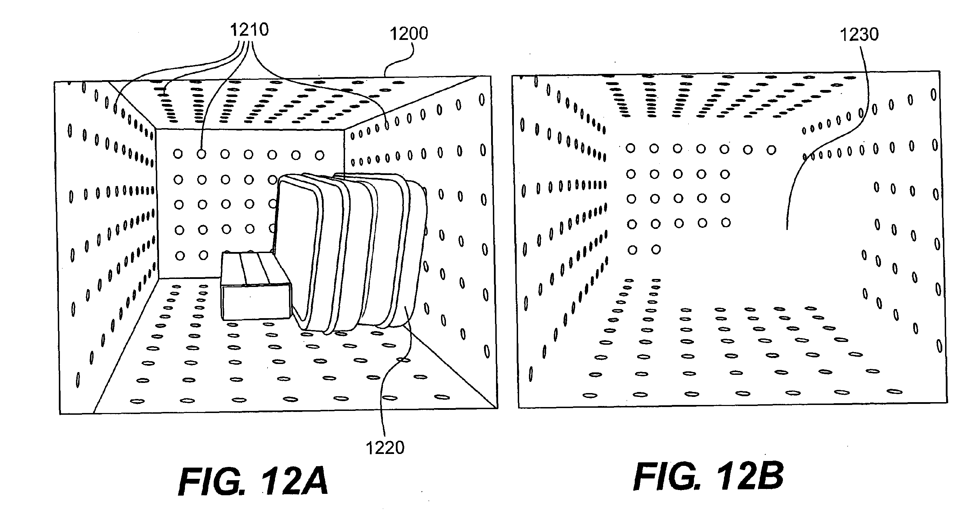

Figure 12 illustrates an example of using the passive illuminant light based detection system 1000. To make it easier to detect whether an area of surface is occupied or not, marks 1210 are painted inside a container 1200. Marks 1210 form grids that correspond to the divided sub-areas on the surfaces. As shown by Figure 12A, objects 1220 are loaded in container 1200. Marks behind, beneath and to the right of objects 1220 are not visible from the view angle as shown in Figure 12A. A picture of the inside of container 1200 is taken from the same view angle. Figure 12B shows the picture after being analyzed using process 1100. Objects 1220 in the picture are filtered out by detecting the existence of marks. For example, no marks appear in area 1230, and thus area 1230 is determined as occupied by the objects. The analyzed picture as shown in Figure 12B can then be mapped to the surfaces to determine the occupancy statuses of the sub-areas.

**C. Structured Light Based Detection System**

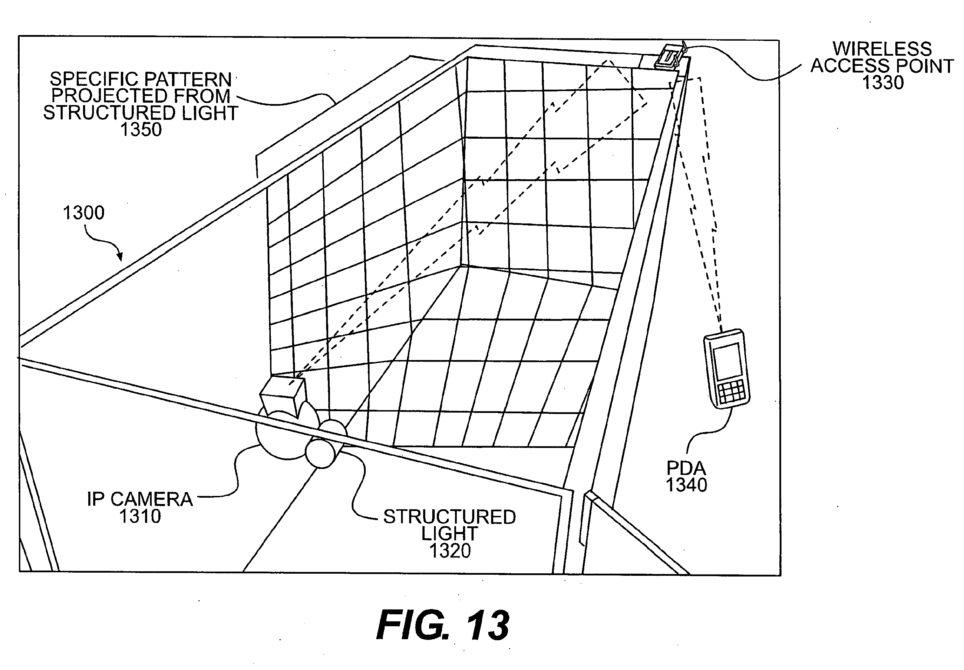

Figure 13 shows an exemplary structured light based detection system 1300 for detecting occupancy statuses of sub-areas in cargo container 210. Detection system 1300 is an embodiment or a part of freight space utilization system 200. Detection system 1300 includes a imaging device 1310, a structured light source 1320, a wireless access point 1330, and a PDA 1340.

Detection system 1300 is similar to detection system 1000, except that no passive illuminant patterns are painted on the surface inside cargo container 210. Instead, a specific pattern 1350 is projected from structured light source 1320. Specific pattern 1350, when projected on an object, may vary along with the outline of the object. This variation contains information about the shape, position and volume of the object, and thus can be used to detect the occupation status of sub-areas. Consistent with embodiments of the present invention, if there is no other light that illuminates cargo container 120, normal light may also be used to replace the structured light.

Imaging device 1310 is mounted on the ceiling towards the rear side of cargo container 210, and is configured to take pictures of specific pattern 1350. The angle and the focal length of imaging device 1310 are both adjustable. Similar to detection system 1000, cargo container 210 can be segmented into a plurality of regions. Imaging device 1310 can be adjusted to a specific angle and a specific focal length to take pictures of the specific pattern within each region.

Imaging device 1310 is controlled by PDA 1340 via wireless access point 1330 mounted on the truck. PDA 1340 may contain various applications to adjust the angle and focal length of the imaging device for taking pictures of each region in cargo container 210. All the regions may be imaged twice. In the first round, imaging device 1310 may take a first set of pictures of specific pattern 1350 created by the structured light projecting on an empty cargo container 210, before the objects are loaded. After the objects are loaded, imaging device 1310 may go through all the regions again to take a second set of pictures of specific pattern 1350 by the structured light projecting on the loaded objects. In each region, imaging device 1310 is adjusted to the same angle and same focal length as used for that region in the first round, such that each picture in the second set of pictures corresponds to a picture in the first set of pictures.

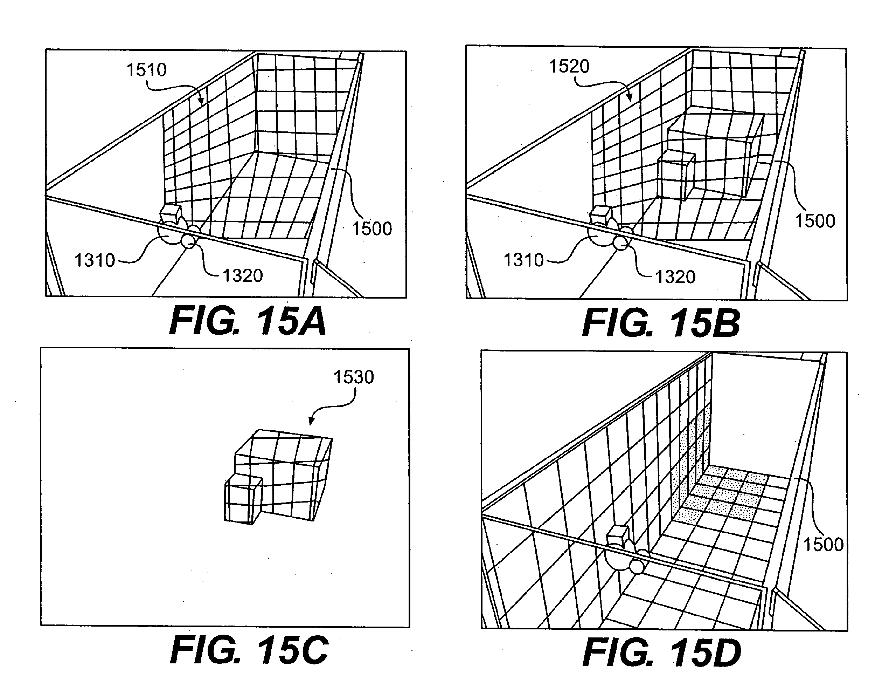

PDA 1340 may further contain applications to analyze the pictures and determine the occupancy statuses of sub-areas based on the pictures. Figure 15 shows a flow chart of an exemplary process 1400 for detecting occupancy statuses of sub-areas using a structured light based detection system 1300. Applications contained in a remote device, such as PDA 1340, or embedded inside the imaging device, may adjust the angle and focal length of imaging device 1310 for taking pictures of patterns in each region of cargo container 210 (step 1401). Cargo container 210 may be segmented into a plurality of regions, and two sets of pictures may be taken in each region. In step 1402, a first set of pictures of the structured light pattern are taken when no object is present. In step 1403, a second set of pictures of the structured light pattern are taken when at least one object is present in cargo container 210.

The pictures are analyzed one region after another. In step 1404, the two sets of pictures for the first region are analyzed. A pattern is picked out from a picture in the first set (step 1405). Based on the pattern, a differential pattern is filtered out between the picture in the first set and its corresponding picture in the second set (step 1406). Because the structured light pattern varies with the outline of the object, the differential pattern represents the area that is occupied by the object. The differential pattern is then mapped to the surfaces of cargo container 210 (step 1407). Consistent with embodiments of the present disclosure, the positions of the differential pattern are mapped to positions of sub-areas in the current region. Occupancy statuses of sub-areas are determined based on the mapped differential pattern (step 1408). For example, a sub-area is set as occupied, if it is covered by the difference pattern. Similarly, a sub-area is set as unoccupied, if it is not covered by the differential pattern.

In step 1409, it is determined if all the regions are analyzed. If there is still at least one region left unanalyzed, process 1400 returns to step 1404 to analyze the next region. Steps 1404-1409 will be repeated until all the pictures are analyzed, and then process 1400 will end. After the occupancy statuses are detected, process 500 may be adapted for computing the shape and volume of a vacant space in cargo container 210.

Figure 15 illustrates an example of using the structured light based detection system 1300. As shown in Figure 15A, no object is loaded in container 1500, and a structured light pattern 1510 is created by the structured light on the container surface. Imaging device 1310 is adjusted to a specific angle and a specific focal length to take a first picture of structured light pattern 1510. In Figure 15B, objects 1550 are loaded in container 1500. Accordingly, a structured light pattern 1520 is created by the structured light on objects 1550 and container 1500. Notice that structured light pattern 1520 varies with the outline of objects 1550, and thus is different from structured light pattern 1510.

A differential pattern 1530 can be filtered out between structured light pattern 1510 and structured light pattern 1520, as shown in Figure 15C. The differential pattern 1530 is mapped to the surfaces of container 1500. Based on the mapping relationship between the positions of pixels in differential pattern 1530 and the positions of sub-areas in container 1500, sub-areas 1540 that are occupied by objects 1550 can be identified, as shown in Figure 15D.

It will be apparent to those skilled in the art that various modifications and variations can be made in the disclosed embodiments without departing from the scope or spirit of the invention. Other embodiments of the invention will be apparent to those skilled in the art from consideration of the specification and practice of the invention disclosed herein. It is intended that the specification and examples be considered as exemplary only, with a true scope and spirit of the invention being indicated by the following claims.

**Claims**

1. A method for detecting at least one object within a storage space, comprising:

identifying at least one surface among surfaces confining the storage space;

dividing each of the at least one surface into a plurality of sub-areas;

detecting an occupancy status of each sub-area, wherein the occupancy status is indicative of the presence of the at least one object over each of the at least one surface; and

deriving at least one of volume, location, and shape information of the at least one object, based on the occupancy statuses of the sub-areas.

2. The method of claim 1, further comprising deriving at least one of volume, location, and shape information of a remaining space unoccupied by the at least one object within the storage space.

3. The method of claim 1 or 2, wherein the storage space is divided into a plurality of sub-spaces, each sub-space being associated with one sub-area of each of the at least one surface, the sub-area being a projection of a sub-space on the corresponding surface, and

wherein deriving the volume information of the at least one object includes:

identifying sub-spaces that are occupied by the at least one object, wherein a sub-space is occupied if at least two of its associated sub-areas are occupied; and

deriving the volume information of the at least one object based on the volume of each occupied sub-space.

4. The method of claim 1, 2 or 3, wherein detecting an occupancy status of each sub-area includes:

receiving a signal from a sensor configured to detect an object-presence status of each sub-area of the at least one surface based on at least one emitted signal from a signal source in the storage space, wherein the signal cannot penetrate the at least one object; and

identifying occupancy of a sub-area if intensity of the received signal of the corresponding sensor is lower than a threshold;

wherein, optionally, the signal is light, the sensor is a light detector, and the signal source is a light emitter.

5. The method of any one of the preceding claims, wherein the storage space has a first end and a second end opposite to the first end, the second end being closer to an entrance of the storage space than the first end, the method further comprising:

placing the at least one object close to the first end, wherein the sub-areas closer to the first end are larger than the sub-areas closer to the second end.

6. The method of any one of the preceding claims, wherein detecting an occupancy status of each sub-area includes:

having patterns arranged on at least some of the sub-areas of the at least one surface;

receiving at least one image of the patterns from an imaging device configured to observe the storage space; and

processing the at least one image to derive the occupancy status of each sub-area.

wherein processing the at least one image optionally includes:

mapping the at least one image to the at least one surface; and

identifying occupancy of a sub-area if the corresponding pattern of the sub-area is not present based on the at least one image;

and/or

wherein receiving the at least one image of the patterns from an imaging device optionally includes:

segmenting the storage space into a plurality of regions; and

for each region, directing the imaging device to an angle and a focal length suitable for providing an image of the patterns in the region.

7. The method of any one of the preceding claims, wherein detecting an occupancy status of each sub-area includes:

projecting a structured light in the storage space;

taking a first set of images of a first light pattern created by the structured light using an imaging device before the at least one object is placed in the storage space;

taking a second set of images of a second light pattern created by the structured light using the imaging device after the at least one object is placed in the storage space, wherein each image in the second set of images corresponds to a image in the first set of images; and

processing the first set of images and the second set of images to detect the occupancy status of each sub-area;

wherein processing the first set of images and the second set of images optionally includes:

determining a differential pattern based on each image in the second set of images and the corresponding image in the first set of images;

mapping the differential patterns to the at least one surface; and

identifying occupancy of a sub-area if the sub-area is covered by the differential pattern;

and/or

wherein taking the first set of images and the second set of images optionally includes:

segmenting the storage space into a plurality of regions;

directing the imaging device to an angle and a focal length for taking a first image of the first light pattern in a region; and

directing the imaging device to the same angle and the same focal length for taking a second image of the second light pattern in the same region.

8. A system for detecting at least one object within a storage space, comprising:

a signal source configured to emit at least one signal, wherein the at least one signal does not penetrate the at least one object;

a plurality of sensors placed on at least one surface among surfaces confining the storage space, wherein each of the at least one surface is divided into a plurality of sub-areas and each sub-area has a sensor placed therein, wherein the plurality of sensors are configured to detect the at least one signal emitted by the signal source; and

a processor configured to:

detect an occupancy status of each sub-area based on the detected signal of each sensor, wherein the occupancy status is indicative of the presence of the at least one object over each of the at least one surface; and

derive at least one of volume, location, and shape information of the at least one object, based on the occupancy statuses of the sub-areas.

9. The system of claim 8, wherein any one, some or all of the following (a)-(d) apply:

(a) the processor is further configured to derive at least one of volume, location, and shape information of a remaining space unoccupied by the at least one object within the storage space;

(b) a sub-area is determined as being occupied if intensity of the detected signal of the corresponding light sensor is lower than a threshold;

(c) the signal is a light signal, the sensor is a light detector, and the signal source is a light emitter;

(d) the storage space has a first end and a second end opposite to the first end, the second end being closer to an entrance of the storage space than the first end, wherein the sub-areas closer to the first end are larger than the sub-areas closer to the second end.

10. The system of claim 8 or 9, wherein the storage space is divided into a plurality of sub-spaces, each sub-space associated with one sub-area on each of the at least one surface, the sub-area being a projection of a sub-space on the corresponding surface,

wherein the volume of the at least one object is determined by:

identifying sub-spaces that are occupied by the at least one object, wherein a sub-space is occupied if at least two of its associated sub-areas are occupied;

determining volume of each occupied sub-space; and

deriving the volume of the at least one object based on the volume of each occupied sub-space.

**11.** A system for detecting at least one object within a storage space, comprising:

a plurality of patterns placed on at least one surface among surfaces confining the storage space, wherein each of the at least one surface is divided into a plurality of sub-areas and each sub-area has a pattern placed therein; an imaging device located within the storage space, configured to take at least one image of the patterns; and a processor configured to:

detect an occupancy status of each sub-area based on the at least one image, wherein the occupancy status is indicative of the presence of the at least one object over each of the at least one surface; and derive at least one of volume, location, and shape information of the at least one object, based on the occupancy statuses of the sub-areas.

**12.** The system of claim 11, wherein occupancy status of each sub-area is detected by:

mapping the at least one image to the at least one surface; and identifying occupancy of a sub-area if the corresponding pattern in the sub-area is invisible on the at least one image.

**13.** The system of claim 11 or 12, wherein the storage space is segmented into a plurality of regions, wherein the imaging device is directed to an angle and a focal length suitable for taking a image of the patterns in each region.

**14.** A system for detecting at least one object within a storage space, comprising:

a light source configured to project a structured light on at least one surface among surfaces confining the storage space, wherein each of the at least one surface is divided into a plurality of sub-areas and each sub-area has a pattern placed therein; an imaging device configured to:

take a first set of images of a first light pattern created by the structured light before the at least one object is placed in the storage space; and take a second set of images of a second light pattern created by the structured light after the at least one object is placed in the storage space, wherein each image in the second set of images corresponds to a image in the first set of images; and a processor configured to:

detect an occupancy status of each sub-area based on the first set of images and the second set of images, wherein the occupancy status is indicative of the presence of the at least one object over each of the at least one surface; and derive at least one of volume, location, and shape information of the at least one object, based on the occupancy statuses of the sub-areas.

**15.** The system of claim 14, wherein occupancy status of each sub-area is detected by:

determining a differential pattern based on each image in the second set of images and the corresponding image in the first set of images; mapping the differential patterns to the at least one surface; and identifying occupancy of a sub-area if the sub-area is covered by the differential pattern.

**16.** The system of claim 14 or 15, wherein the storage space is segmented into a plurality of regions, wherein the imaging device is directed to an angle and a focal length for taking a first image of the first light pattern in a region and directed to the same angle and the same focal length for taking a second image of the second light pattern in the same region.

**FIG. 1**
PRIOR ART

EP 2 169 606 A1

**FIG. 2**

**FIG. 3**

EP 2 169 606 A1

(3,2,7)

401

411
(3,7)

401    (3,2,7)

402
(2,7)

403
(3,7)

310

320

Z

Z

Z

Y

X

Y

LEFT
SURFACE

BOTTOM
SURFACE

330

RIGHT
SURFACE

**FIG. 4**

EP 2 169 606 A1

500

START

501

DIVIDE CARGO CONTAINER
INTO SUB-SPACES

502

CLASSIFY SURFACES

503

DIVIDE EACH IDENTIFIED
SURFACE INTO SUB-AREAS

504

DETECT OCCUPANCY STATUS OF
SUB-AREAS ON EACH SURFACE

505

DETERMINE OCCUPANCY STATUS OF
EACH SUB-SPACE BASED ON THE
OCCUPANCY STATUSES OF SUB-AREAS

506

DETERMINE FREE SPACE IN
THE CARGO CONTAINER

END

## FIG. 5

FIG. 6

COMPUTING
DEVICE
604

210

600

SIGNAL
SOURCE
602

MAGNETIC
SWITCH
SENSOR
601

LIGHT SENSOR
MODULES
603

EP 2 169 606 A1

LEFT
SURFACE
310

BOTTOM
SURFACE
330

RIGHT
SURFACE
320

*FIG. 7*

EP 2 169 606 A1

EP 2 169 606 A1

802

603

801

803

603

804

FIG. 8

*FIG. 9*

EP 2 169 606 A1

FIG. 10

1100

START

APPLICATION CONTROLS CAMERA TO
ADJUST ANGLE AND FOCAL LENGTH
FOR TAKING PICTURES OF EACH REGION
1101

ANALYZE THE FIRST/NEXT PICTURE
1102

IDENTIFY REGION WHERE THE PICTURE
IS TAKEN BASED ON SEPARATION LINES
1103

RECORD POSITIONS OF PATTERNS THAT
APPEAR IN THE AREA
1104

COMPUTE THE OCCUPANCY STATUS
OF SUB-AREAS IN THE SURFACES
1105

NO — ALL PICTURES ANALYZED ? — 1106

YES

END

**FIG. 11**

FIG. 12B

1230

FIG. 12A

1200

1220

1210

**FIG. 13**

```
            ┌─────────────┐
            │    START    │              ╭1400
            └─────────────┘              
                   │
                   ▼
   ┌─────────────────────────────────────┐  ╭1401
   │ APPLICATION CONTROLS CAMERA TO ADJUST│
   │  ANGLE AND FOCAL LENGTH FOR TAKING   │
   │       PICTURES OF EACH REGION        │
   └─────────────────────────────────────┘
                   │
                   ▼
   ┌─────────────────────────────────────┐  ╭1402
   │   TAKE FIRST PICTURE OF EACH REGION  │
   │      WHEN NO OBJECT IS PRESENT       │
   └─────────────────────────────────────┘
                   │
                   ▼
   ┌─────────────────────────────────────┐  ╭1403
   │  TAKE SECOND PICTURE OF EACH REGION  │
   │       WHEN OBJECT IS PRESENT         │
   └─────────────────────────────────────┘
                   │
                   ▼
   ┌─────────────────────────────────────┐  ╭1404
   │       ANALYZE PICTURES OF THE        │
   │          FIRST/NEXT REGION           │
   └─────────────────────────────────────┘
                   │
                   ▼
   ┌─────────────────────────────────────┐  ╭1405
   │   PICK OUT THE PATTERN IN A FIRST    │
   │             PICTURE                  │
   └─────────────────────────────────────┘
                   │
                   ▼
   ┌─────────────────────────────────────┐  ╭1406
   │ FILTER OUT DIFFERENCE PATTERN BETWEEN│
   │  FIRST PICTURE AND THE CORRESPONDING │
   │            SECOND PICTURE            │
   └─────────────────────────────────────┘
                   │
                   ▼
   ┌─────────────────────────────────────┐  ╭1407
   │     MAP THE DIFFERENCE PATTERN       │
   │          TO THE SURFACE              │
   └─────────────────────────────────────┘
                   │
                   ▼
   ┌─────────────────────────────────────┐  ╭1408
   │    DETERMINE OCCUPANCY STATUS OF     │
   │      SUB-AREAS IN EACH SURFACE       │
   └─────────────────────────────────────┘
                   │
                   ▼
               ╱   ALL   ╲              ╭1409
        NO   ╱   REGIONS   ╲
     ◄──────◄    ANALYZED    ►
              ╲      ?      ╱
               ╲          ╱
                   │ YES
                   ▼
            ┌─────────────┐
            │     END     │
            └─────────────┘
```

**FIG. 14**

**FIG. 15A**

1510
1310
1320
1500

**FIG. 15B**

1520
1310
1320
1500

**FIG. 15C**

1530

**FIG. 15D**

1500

# EP 2 169 606 A1

Europäisches Patentamt

European Patent Office

Office européen des brevets

## EUROPEAN SEARCH REPORT

Application Number

EP 09 25 1331

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,X | US 2004/008259 A1 (GOKTURK SALIH BURAK [US] ET AL GOKTURK SALIH BURAK [US] ET AL) 15 January 2004 (2004-01-15) * abstract * * paragraph [0015] * * paragraph [0047] * * paragraph [0063] * * paragraph [0074] * * paragraph [0081] * * paragraph [0088] * * figures 2,10 * | 1-16 | INV. G06Q10/00 |
| A | EP 1 583 015 A (TAMTRON OY [FI]) 5 October 2005 (2005-10-05) * abstract * * paragraph [0052] * * paragraph [0056] * * paragraph [0062] * * figure 1 * | 1-16 | |
| A | EP 0 540 343 A (MATSUSHITA ELECTRIC WORKS LTD [JP]) 5 May 1993 (1993-05-05) * abstract * * claim 1 * | 1-16 | TECHNICAL FIELDS SEARCHED (IPC) G06Q |
| A | US 5 473 545 A (SCHAUSTEN CHRISTOPH [DE]) 5 December 1995 (1995-12-05) * abstract * | 1-16 | |

The present search report has been drawn up for all claims

| Place of search | Date of completion of the search | Examiner |
|---|---|---|
| The Hague | 19 November 2009 | Falierou, Christina |

EPO FORM 1503 03.82 (P04C01)

## ANNEX TO THE EUROPEAN SEARCH REPORT
## ON EUROPEAN PATENT APPLICATION NO.

EP 09 25 1331

This annex lists the patent family members relating to the patent documents cited in the above-mentioned European search report.
The members are as contained in the European Patent Office EDP file on
The European Patent Office is in no way liable for these particulars which are merely given for the purpose of information.

19-11-2009

| Patent document cited in search report | | Publication date | Patent family member(s) | | Publication date |
|---|---|---|---|---|---|
| US 2004008259 | A1 | 15-01-2004 | NONE | | |
| EP 1583015 | A | 05-10-2005 | FI | 118579 B1 | 31-12-2007 |
| EP 0540343 | A | 05-05-1993 | DE | 69208421 D1 | 28-03-1996 |
| | | | DE | 69208421 T2 | 12-09-1996 |
| | | | US | 5351126 A | 27-09-1994 |
| US 5473545 | A | 05-12-1995 | AT | 154984 T | 15-07-1997 |
| | | | EP | 0620528 A1 | 19-10-1994 |
| | | | ES | 2104219 T3 | 01-10-1997 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61099723 A
- US 7310431 B, Gokturk